# EUROPÄISCHE PATENTSCHRIFT

(11) **EP 4 211 434 B1**
(45) Veröffentlichungstag und Bekanntmachung des Hinweises auf die Patenterteilung: **19.02.2025**
(21) Anmeldenummer: 21794793.6
(22) Anmeldetag: 15.10.2021
(51) Int. Cl.: G01K 1/08, G01K 13/02, G01F 1/56

(54) **DREIDIMENSIONALER SCHALTUNGSTRÄGER, ANORDNUNG AUS EINEM SOLCHEN SCHALTUNGSTRÄGER UND EINER METALLISCHEN HÜLSE, MESSGERÄT DER PROZESSMESSTECHNIK MIT EINER SOLCHEN ANORDNUNG SOWIE VERWENDUNG EINER SOLCHEN ANORDNUNG**
THREE-DIMENSIONAL CIRCUIT CARRIER, ARRANGEMENT COMPRISING SUCH A CIRCUIT CARRIER AND A METAL SLEEVE, MEASURING INSTRUMENT FOR PROCESS MEASUREMENT TECHNOLOGY HAVING SUCH AN ARRANGEMENT, AND USE OF SUCH AN ARRANGEMENT
SUPPORT DE CIRCUIT TRIDIMENSIONNEL, ARRANGEMENT COMPRENANT UN TEL SUPPORT CIRCUIT ET UN MANCHON MÉTALLIQUE, INSTRUMENT DE MESURE POUR UNE TECHNOLOGIE DE MESURE DE PROCESSUS AYANT UN TEL ARRANGEMENT, ET UTILISATION D'UN TEL ARRANGEMENT

(30) Priorität: 21.10.2020 DE 102020127691
(43) Veröffentlichungstag der Anmeldung: 19.07.2023
(73) Patentinhaber: ifm electronic gmbh, 45128 Essen (DE)
(72) Erfinder: LIEHR, Sebastian, 88099 Neukirch (DE)
(74) Vertreter: Ifm Patentabteilung
(86) Internationale Anmeldenummer: PCT/EP2021/078586
(87) Internationale Veröffentlichungsnummer: WO 2022/084175

(56) Entgegenhaltungen:
- DE-A1- 102016 204 796
- US-A1- 2014 341 255
- US-B2- 9 453 768
- US-B2- 9 631 966

## Beschreibung

Die Erfindung betrifft einen dreidimensionalen Schaltungsträger, eine Anordnung aus einem solchen Schaltungsträger und einer metallischen Hülse, ein Messgerät der Prozessmesstechnik mit einer solchen Anordnung sowie eine Verwendung einer solchen Anordnung.

Messgeräte der Prozessmesstechnik werden in der Automatisierungstechnik dazu eingesetzt, die Eigenschaften eines Fluids, bspw. hinsichtlich Druck, Temperatur, Durchfluss, Füllstand zu überwachen. Zur Messung des Durchflusses sind seit vielen Jahren magnetisch-induktive Durchflussmessgeräte bekannt. Die Funktionsweise dieser Messgeräte beruht auf dem Prinzip der magnetischen Induktion. Hierbei wird die Durchflussmenge des Mediums durch ein Messrohr unter Zuhilfenahme eines Magnetfeldes sowie zweier Messelektroden bestimmt. Das Magnetfeld durchdringt bei der Messung das Messrohr und gleichzeitig das durch das Messrohr fließende Medium. Wird ein elektrisch leitendes Medium von einem Magnetfeld senkrecht zu dessen Durchflussrichtung durchdrungen, werden die Ladungsträger im Magnetfeld senkrecht zur Durchflussrichtung und senkrecht zum Magnetfeld abgelenkt. Dabei wird eine induzierte Spannung zwischen den beiden Messelektroden induziert. Wenn diese induzierte Spannung über die Messelektroden abgegriffen wird, kann diese als Maß für die Durchflussmenge zur weiteren Auswertung herangezogen werden.

Neben der Durchflussmessung kann es notwendig sein, auch die Temperatur des durchfließenden Mediums zu erfassen, um Temperatureinflüsse zu kompensieren. Die Temperatur hat bekannterweise einen zum Teil erheblichen Einfluss auf die physikalisch-chemische Beschaffenheit des Mediums, was wiederum einen Einfluss auf das Messergebnis haben kann. Ist die Temperatur des Mediums bekannt, können entsprechende Korrekturfaktoren ermittelt werden, die die Messergebnisse bei unterschiedlichen Temperaturzuständen vergleichbar machen.

Da die Durchflussmessung bei vollständig gefülltem Messrohr erfolgen sollte, ist es für den Anwender derartiger Messgeräte von Interesse, welchen Befüllungszustand das Messgerät bzw. das Messrohr momentan hat, insbesondere ob das Messrohr leer ist. Diese Information ist notwendig, um das Ergebnis zu bewerten.

Vor diesem Hintergrund offenbart die DE 102010001993 B4 ein magnetisch-induktives Durchflussmessgerät mit einer Temperaturmessvorrichtung, die ein metallisches Gehäuse umfasst. Dieses metallische Gehäuse fungiert gleichzeitig als Elektrode und kann somit zur Messung einer Mindestleitfähigkeit herangezogen werden.

Die DE 10 2016 204 796 A1 offenbart ein zylinderförmiges Substrat, auf dem eine Leiterbahn und ein Sensorelement angeordnet ist.

Als weiterer Stand der Technik sind die US 9,453,768 B2, US 2014/0341255 A1 und US 9 631 966 B2 zu nennen.

Aufgabe der Erfindung ist es, die Herstellung der in Rede stehenden Messgeräte zu vereinfachen.

Die Aufgabe wird erfindungsgemäß gelöst durch eine Vorrichtung mit den Merkmalen des Anspruchs 1, einer Anordnung nach Anspruch 7, einem Messgerät nach Anspruch 9 sowie durch eine Verwendung nach Anspruch 10. Vorteilhafte Ausgestaltungen der Erfindung sind in den Unteransprüchen angegeben.

Erfindungsgemäß umfasst der dreidimensionale Schaltungsträger ein Substrat, wenigstens zwei elektrischen Leiterbahnen, mindestens ein Sensorelement und einen Anschlussbereich zur elektrischen Kontaktierung der wenigstens zwei Leiterbahnen mit einem elektrischen Leiter. Der Schaltungsträger weist dabei eine längsgestreckte Form auf, vorzugsweise eine zylindrische oder pyramidenförmige Form. An einem ersten Ende des Schaltungsträgers ist das Sensorelement und an dem entgegengesetzten zweiten Ende der Anschlussbereich angeordnet. Beide Leiterbahnen verlaufen nebeneinander auf der Außenseite des Schaltungsträgers, wobei eine erste Leiterbahn das vorzugsweise als Temperaturfühler ausgeführte Sensorelement mit dem Anschlussbereich elektrisch verbindet und eine zweite Leiterbahn geeignet ist, durch ein metallisches Gegenstück galvanisch gekoppelt zu werden, bspw. um eine Erdung zu realisieren. Das erste Ende des Schaltungsträgers wird aus wenigsten einer schmalen Verlängerung des Substrats gebildet und das Sensorelement ist neben dieser Verlängerung angeordnet, und zwar derart, dass das Sensorelement gegenüber der Längserstreckung der schmalen Verlängerung zurückversetzt ist. Schließlich weist die Außenseite des Schaltungsträgers mehrere, vorzugsweise vier sich längserstreckende Rippen auf. Auf zumindest einer dieser Rippen verläuft dabei die zweite Leiterbahn.

Der Schaltungsträger ist bevorzugt im Spritzgussverfahren hergestellt, wobei jedoch auch andere Herstellungsverfahren infrage kommen, insbesondere ein additives Fertigungsverfahren oder Fräsen.

Gemäß eines weiteren Aspekts umfasst die Erfindung eine Anordnung aus einem zuvor genannten dreidimensionalen Schaltungsträger und einer metallischen Hülse, wobei die Hülse ein Sackloch aufweist, in das der Schaltungsträger mittels Presspassung eingeführt ist, und die zweite Leiterbahn des Schaltungsträgers mit der metallischen Hülse in elektrischem Kontakt steht.

Gemäß eines weiteren Aspekts umfasst die Erfindung ein Messgerät der Prozessmesstechnik, insbesondere ein magnetisch-induktives Durchflussmessgerät, mit einer zuvor genannten Anordnung.

Gemäß eines weiteren Aspekts umfasst die Erfindung die Verwendung der zuvor genannten Anordnung zur Leerrohrerkennung bei einem magnetisch-induktiven Durchflussmessgerät.

Der Vorteil der Erfindung besteht zum einen darin, dass der in Rede stehende Schaltungsträger einfach herstellbar und leicht zu montieren ist. Damit wird die Fertigung entsprechender Geräte, bspw. eines magnetisch-induktiven Durchflussmessgeräts erheblich vereinfacht. Darüber hinaus können zwei, bspw. bei magnetisch-induktiven Durchflussmessgeräten notwendige Messeinrichtungen, nämlich die Temperaturmessung und die Leerohrerkennung, platzsparend und kompakt in einer Einheit integriert werden.

Eine vorteilhafte Weiterbildung sieht vor, dass das erste Ende des Schaltungsträgers aus zwei parallel zueinander verlaufenden seitlichen Verlängerungen des Substrats gebildet wird und das Sensorelement zwischen diesen seitlichen Verlängerungen angeordnet ist, und zwar derart, dass das Sensorelement gegenüber der Längserstreckung der seitlichen Verlängerungen zurückversetzt ist. Auch wenn grundsätzlich eine einzelne Verlängerung ausreichend ist, um den Erfindungsgedanken zu realisieren, hat sich das Vorsehen von zwei parallel zueinander verlaufenden seitlichen Verlängerungen als besonders vorteilhaft herausgestellt.

Wenn der Schaltungsträger im Rahmen der erfindungsgemäßen Anordnung in die metallische Hülse eingeführt ist, wird durch die Rippen zum einen die Montage, d.h. die Realisierung der Presspassung vereinfacht und zum anderen dabei gleichzeitig auf einfache Weise die galvanische Kopplung zwischen der zweiten Leiterbahn und der metallischen Hülse hergestellt, um bspw. bei einem magnetisch-induktiven Durchflussmessgerät die Hülse als Elektrode fungierend mit einem Bezugspotential zur Messung der Leitfähigkeit des Messmediums zu verbinden und damit eine Leerohrerkennung möglich zu machen.

Nachfolgend wird die Erfindung anhand von Ausführungsbeispielen unter Bezugnahme auf die Zeichnungen näher erläutert.

Es zeigen schematisch:
- Figuren 1a-1c: verschiedene Ansichten des erfindungsgemäßen Schaltungsträgers,
- Figur 2a: Anordnung aus dem erfindungsgemäßen Schaltungsträger und einer metallischen Hülse,
- Figur 2b: Schnittbild der Anordnung aus Fig. 2a,
- Figur 3: Durchflussmessgerät mit der erfindungsgemäßen Anordnung gemäß Fig. 2a bzw. 2b.

Bei der nachfolgenden Beschreibung der bevorzugten Ausführungsformen bezeichnen gleiche Bezugszeichen gleiche oder vergleichbare Komponenten.

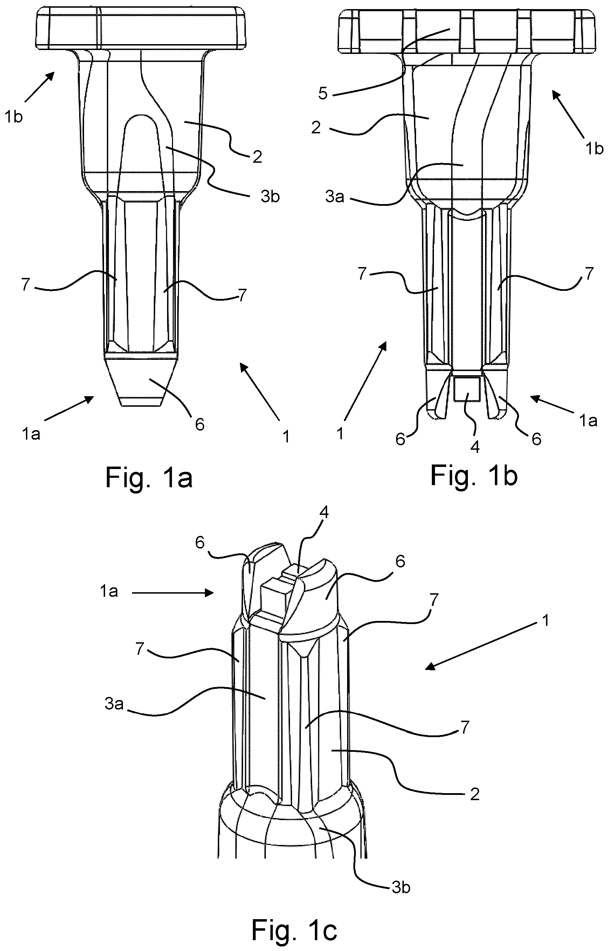

In den Figuren 1a-1c sind verschiedene Ansichten des erfindungsgemäßen Schaltungsträgers 1 dargestellt, wobei die Figuren 1a und 1b eine 90° um die Längsachse gedrehte Seitenansicht und Figur 1c eine perspektivische Ansicht darstellt.

Der dreidimensionale Schaltungsträger 1 besteht im Wesentlichen aus einem Substrat 2, zwei auf der Außenseite des Schaltungsträgers 1 verlaufenden elektrischen Leiterbahnen 3a, 3b, einem Sensorelement 4 und einem Anschlussbereich 5 zur elektrischen Kontaktierung der zwei Leiterbahnen 3a, 3b mit einem elektrischen Leiter 10. Der Schaltungsträger 1 weist dabei eine längsgestreckte, vorzugsweise zylindrische oder pyramidenförmige Form auf. An einem ersten Ende 1a ist das Sensorelement 4 und an einem entgegengesetzten zweiten Ende 1b ist der Anschlussbereich 5 angeordnet.

Die Außenseite des Schaltungsträgers 1 weist mehrere, vorliegend vier sich längserstreckende Rippen 7 auf. Diese vereinfachen dann den Montagevorgang, wenn der Schaltungsträger 1 bspw. in eine Hülse 20 eingeführt wird.

Eine Leiterbahn 3a verläuft zwischen zwei Rippen 7 und stellt die elektrische Verbindung zwischen dem Sensorelement 4 und dem Anschlussbereich 5 her. Die andere Leiterbahn 3b verläuft auf zumindest einer Rippe 7 und ist für die galvanische Kopplung mit der Hülse 20 vorgesehen.

Zu erkennen ist insbesondere in den Fig. 1b und 1c, dass das erste Ende 1a des Schaltungsträgers 1 aus zwei parallel zueinander verlaufenden seitlichen Verlängerungen 6 des Substrats 2 gebildet wird und dass das Sensorelement 4 zwischen diesen beiden seitlichen Verlängerungen 6 angeordnet ist. Dabei ist das Sensorelement 4 gegenüber der Längserstreckung der seitlichen Verlängerungen 6 zurückversetzt, so dass das Sensorelement 4 insbesondere bei einem axialen Anschlag seitlich und in Längsrichtung geschützt ist. Die Erfindung geht grundsätzlich davon aus, dass auch eine einzelne Verlängerung 6 ausreichend ist, um den Erfindungsgedanken zu realisieren. Das Vorsehen von zwei parallel zueinander verlaufenden seitlichen Verlängerungen 6 stellt somit eine bevorzugte Ausführungsform dar.

Das Sensorelement 4 ist dabei vorzugsweise als Temperaturfühler ausgeführt, z.B. NTC, Pt-Element, I²C-Baustein.

Beispielhaft weist der Schaltungsträger eine maximale Längserstreckung von etwa 1 cm auf und einen Durchmesserverlauf von 1-3 mm.

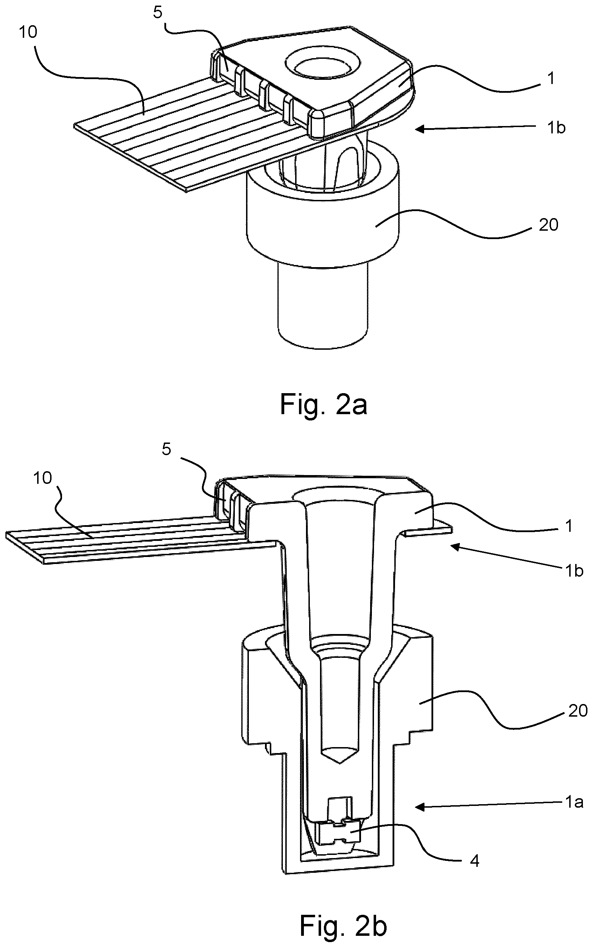

Die Figuren 2a und 2b zeigen eine Anordnung aus dem Schaltungsträger 1 und einer metallische Hülsen 20, wobei Fig. 2a eine perspektivische Ansicht und Fig. 2b ein Schnittbild darstellt.

Die Hülse 20 weist ein Sackloch auf, in das der Schaltungsträger 1 mittels Presspassung bzw. Übermaß eingeführt ist. Die sich längs an der Außenseite des Schaltungsträgers 1 erstreckenden Rippen 7 erleichtern dabei den Montagevorgang. Durch die Presspassung ist der Schaltungsträger 1 mechanisch in der Hülse 20 fixiert. Gleichzeitig führt diese Maßnahme zu einem kleinen Übergangswiderstand und das Luftvolumen wird auf ein Minimum reduziert, so dass ein von außen auf die metallische Hülse einwirkender Temperatureinfluss ohne nennenswerte Verzögerung von dem Sensorelement 4 erfasst wird. Durch Auffüllen des verbleibenden Luftvolumens mit Kleber oder Wärmeleitpaste kann dieser Verzögerungs- bzw. Trägheitseffekt weiter reduziert werden.

Wie erwähnt verläuft auf wenigstens einer Rippe 7 des Schaltungsträgers 1 die zweite Leiterbahn 3b, die im montierten Zustand mit der metallischen Hülse 20 in elektrischem Kontakt steht.

Im oberen Bereich, dem zweiten Ende 1b des Schaltungsträgers 1 ist an dem Anschlussbereich 5 der elektrische Leiter 10 angedeutet, welche vorzugsweise als flexibler Leiterfilm ausgebildet ist. Hierdurch erfolgt die elektrische Verbindung des gesamten Schaltungsträgers 1 mit der weiteren, hier nicht näher dargestellten Auswerteelektronik.

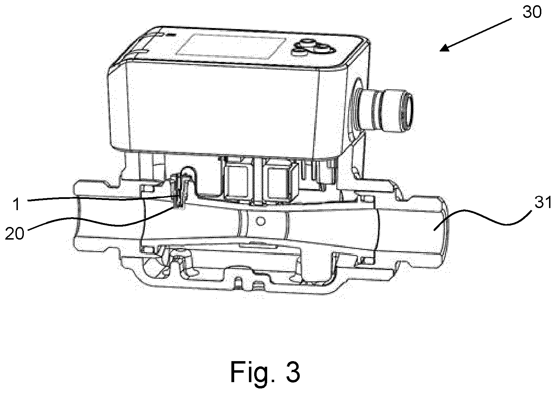

Die Anordnung aus Schaltungsträger 1 und metallischer Hülse 20 ist bspw. bei dem in Figur 3 dargestellten Durchflussmessgerät 30 interessant. Bei einem magnetisch-induktiven Durchflussmessgerät 30 wird zum einen eine Temperaturmessvorrichtung benötigt und andererseits auch eine Leerrohrerkennung, da das zugrunde liegende Messprinzip eine Mindestleitfähigkeit voraussetzt. Die Anordnung aus Schaltungsträger 1 und metallischer Hülse 20 fungiert somit gleichzeitig als Elektrode, welche über eine Auswerteelektronik elektrisch mit einem Bezugspotential verbunden zur Messung der Leitfähigkeit des Messmediums dient, und als Messeinrichtung zur Erfassung der Temperatur des Mediums im Messrohr 31.

Neben der platzsparenden und kompakten Integration zweier notwendiger Messeinrichtungen besteht ein weiterer Vorteil der Erfindung darin, dass diese Vorrichtung einfach herstellbar ist und leicht zu montieren ist.

### Bezugszeichenliste

- 1: dreidimensionaler Schaltungsträger
- 1a: erstes Ende
- 1b: zweites Ende
- 2: Substrat
- 3a, 3b: elektrische Leiterbahn
- 4: Sensorelement
- 5: Anschlussbereich zur elektrischen Kontaktierung
- 6: Verlängerung des Substrats
- 7: Rippen
- 10: flexibler elektrischer Leiter
- 20: metallische Hülse
- 30: Durchflussmessgerät
- 31: Messrohr

## Patentansprüche

1. Dreidimensionaler Schaltungsträger mit einem Substrat (2), wenigstens zwei elektrischen Leiterbahnen (3a, 3b), mindestens einem Sensorelement (4) und einem Anschlussbereich (5) zur elektrischen Kontaktierung der wenigstens zwei Leiterbahnen (3a, 3b) mit einem elektrischen Leiter (10),
wobei der Schaltungsträger (1) eine längsgestreckte Form aufweist und an einem ersten Ende (1a) das Sensorelement (4) und an einem entgegengesetzten zweiten Ende (1b) der Anschlussbereich (5) angeordnet ist,
wobei beide Leiterbahnen (3a, 3b) nebeneinander auf der Außenseite des Schaltungsträgers (1) verlaufen, wobei eine erste Leiterbahn (3a) das Sensorelement (4) mit dem Anschlussbereich (5) elektrisch verbindet und eine zweite Leiterbahn (3b) geeignet ist, durch ein metallisches Gegenstück (20) galvanisch gekoppelt zu werden,
wobei das erste Ende (1a) des Schaltungsträgers (1) aus wenigsten einer schmalen Verlängerung (6) des Substrats (2) gebildet wird und das Sensorelement (4) neben dieser Verlängerung (6) angeordnet ist, derart, dass das Sensorelement (4) gegenüber der Längserstreckung der schmalen Verlängerung (6) zurückversetzt ist
wobei die Außenseite des Schaltungsträgers (1) mehrere, vorzugsweise vier sich längserstreckende Rippen (7) aufweist und die zweite Leiterbahn (3b) auf der Außenseite zumindest einer der sich längserstreckenden Rippen (7) verläuft.

2. Schaltungsträger nach Anspruch 1,
wobei das erste Ende (1a) des Schaltungsträgers (1) aus zwei parallel zueinander verlaufenden seitlichen Verlängerungen (6) des Substrats (2) gebildet wird und das Sensorelement (4) zwischen diesen seitlichen Verlängerungen (6) angeordnet ist, derart, dass das Sensorelement (4) gegenüber der Längserstreckung der seitlichen Verlängerungen (6) zurückversetzt ist.

3. Schaltungsträger nach Anspruch 1 oder 2,
wobei der Schaltungsträger (1) eine zylindrische oder pyramidenförmige Form aufweist.

4. Schaltungsträger nach einem der vorhergehenden Ansprüche, wobei das Sensorelement (4) als Temperaturfühler ausgeführt.

5. Anordnung aus einem dreidimensionalen Schaltungsträger (1) gemäß Anspruch 1 und einer metallischen Hülse (20),
wobei die Hülse (20) ein Sackloch aufweist, in das der Schaltungsträger (1) mittels Presspassung eingeführt ist, und die zweite Leiterbahn (3b) des Schaltungsträgers (1) mit der metallischen Hülse (20) in elektrischem Kontakt steht.

6. Anordnung nach Anspruch 5,
wobei zur Vermeidung eines Luftvolumens die Hülse (20) mit Kleber oder Wärmeleitpaste ausgefüllt ist.

7. Messgerät der Prozessmesstechnik, umfassend eine Anordnung gemäß Anspruch 5 oder 6.

8. Verwendung der Anordnung gemäß Anspruch 5 oder 6 zur Leerrohrerkennung bei einem magnetisch-induktiven Durchflussmessgerät (30).

## Claims

1. Three-dimensional circuit carrier comprising a substrate (2), at least two electrical conductor tracks (3a, 3b), at least one sensor element (4) and a connection region (5) for electrically contacting the at least two conductor tracks (3a, 3b) with an electrical conductor (10),
wherein the circuit carrier (1) has an elongate shape and the sensor element (4) is arranged at a first end (1a) and the connection region (5) is arranged at an opposite second end (1b),
wherein the two conductor tracks (3a, 3b) run next to each other on the outside of the circuit carrier (1), wherein a first conductor track (3a) electrically connects the sensor element (4) to the connection region (5) and a second conductor track (3b) is suitable for being DC-coupled by a metal counterpart (20),
wherein the first end (1a) of the circuit carrier (1) is formed from at least one narrow extension (6) of the substrate (2) and the sensor element (4) is arranged next to this extension (6) such that the sensor element (4) is set back with respect to the longitudinal extent of the narrow extension (6)
wherein the outside of the circuit carrier (1) has a plurality of, preferably four, longitudinally extending ribs (7) and the second conductor track (3b) runs on the outside of at least one of the longitudinally extending ribs (7).

2. Circuit carrier according to claim 1,
wherein the first end (1a) of the circuit carrier (1) is formed from two lateral extensions (6) of the substrate (2) running in parallel with one another and the sensor element (4) is arranged between these lateral extensions (6) such that the sensor element (4) is set back with respect to the longitudinal extent of the lateral extensions (6).

3. Circuit carrier according to claim 1 or claim 2,
wherein the circuit carrier (1) has a cylindrical or pyramidal shape.

4. Circuit carrier according to any of the preceding claims, wherein the sensor element (4) is designed as a temperature sensor.

5. Arrangement consisting of a three-dimensional circuit carrier (1) according to claim 1 and a metal sleeve (20),
wherein the sleeve (20) has a blind hole into which the circuit carrier (1) is inserted by means of a press fit, and the second conductor track (3b) of the circuit carrier (1) is in electrical contact with the metal sleeve (20).

6. Arrangement according to claim 5,
wherein the sleeve (20) is filled with adhesive or thermal paste to prevent an air volume.

7. Measuring device for process measurement technology, comprising an arrangement according to claim 5 or claim 6.

8. Use of the arrangement according to claim 5 or claim 6 for detecting empty pipes in a magnetic-inductive flowmeter (30).

## Revendications

1. Support de circuit tridimensionnel comportant un substrat (2), au moins deux pistes conductrices (3a, 3b) électriques, au moins un élément formant capteur (4) et une zone de raccordement (5) pour la mise en contact électrique des au moins deux pistes conductrices (3a, 3b) avec un conducteur électrique (10),
dans lequel le support de circuit (1) présente une forme allongée et l'élément formant capteur (4) est disposé à une première extrémité (1a) et la zone de raccordement (5) est disposée à une seconde extrémité (1b) opposée,
dans lequel les deux pistes conductrices (3a, 3b) s'étendent l'une à côté de l'autre sur le côté extérieur du support de circuit (1), dans lequel une première piste conductrice (3a) connecte électriquement l'élément formant capteur (4) à la zone de raccordement (5) et une seconde piste conductrice (3b) est appropriée pour être couplée galvaniquement par une contre-partie métallique (20),
dans lequel la première extrémité (1a) du support de circuit (1) est formée par au moins un prolongement (6) étroit du substrat (2) et l'élément formant capteur (4) est disposé à côté dudit prolongement (6) de telle sorte que l'élément formant capteur (4) est en retrait par rapport à l'extension longitudinale du prolongement (6) étroit
dans lequel la face extérieure du support de circuit (1) présente plusieurs, de préférence quatre, nervures (7) s'étendant longitudinalement et la seconde piste conductrice (3b) s'étend sur la face extérieure d'au moins l'une des nervures (7) s'étendant longitudinalement.

2. Support de circuit selon la revendication 1,
dans lequel la première extrémité (1a) du support de circuit (1) est formée par deux prolongements (6) latéraux du substrat (2) s'étendant parallèlement l'un à l'autre et l'élément formant capteur (4) est disposé entre lesdits prolongements (6) latéraux de telle sorte que l'élément formant capteur (4) est en retrait par rapport à l'extension longitudinale des prolongements (6) latéraux.

3. Support de circuit selon la revendication 1 ou 2,
dans lequel le support de circuit (1) présente une forme cylindrique ou pyramidale.

4. Support de circuit selon l'une des revendications précédentes, dans lequel l'élément formant capteur (4) est réalisé en tant que capteur de température.

5. Agencement constitué d'un support de circuit (1) tridimensionnel selon la revendication 1 et d'un manchon (20) métallique,
dans lequel le manchon (20) présente un trou borgne dans lequel le support de circuit (1) est introduit par ajustement serré, et la seconde piste conductrice (3b) du support de circuit (1) est en contact électrique avec le manchon (20) métallique.

6. Agencement selon la revendication 5,
dans lequel, pour éviter un volume d'air, le manchon (20) est rempli de colle ou de pâte thermoconductrice.

7. Appareil de mesure de la technique de mesure des processus, comprenant un agencement selon la revendication 5 ou 6.

8. Utilisation de l'agencement selon la revendication 5 ou 6 pour la détection de tubes vides dans un débitmètre à induction magnétique (30).
